# NEUE EUROPÄISCHE PATENTSCHRIFT

(11) **EP 0 185 831 B2**
(45) Veröffentlichungstag und Bekanntmachung des Hinweises auf die Entscheidung über den Einspruch: **15.02.1995**
(45) Hinweis auf die Patenterteilung: 07.06.1989
(21) Anmeldenummer: 84730152.0
(22) Anmeldetag: 22.12.1984
(51) Int. Cl.: B09B 5/00, C02F 9/00

(54) **Vorrichtung zum kontinuierlichen Reinigen von Boden zur Entfernung von Schadstoffen**
Plant for continuously cleaning soil to remove pollutants
Dispositif pour le nettoyage continu du sol pour l'élimination d'éléments polluants

(43) Veröffentlichungstag der Anmeldung: 02.07.1986
(73) Patentinhaber: Harbauer GmbH & Co. KG, 14052 Berlin (DE); Schade, Horst, Dipl.-Ing., 45525 Hattingen (DE)
(72) Erfinder: Schade, Horst, Dipl. Ing., D-4320 Hattingen (DE); Wilko, Werner, Dipl. Ing., D-1000 Berlin 28 (DE)
(74) Vertreter: Lüke, Dierck-Wilm, Dipl.-Ing.

(56) Entgegenhaltungen:
- EP-A- 0 002 727
- DE-A- 2 030 617
- US-A- 4 336 136
- HANDBOEK BODEMSANERINGSTECHNIEKEN, 1. Ausgabe, Teil II, Juli 1983, Seiten 17,18,29,30,35,149-152,Staatsuitgeverij, Den Haag, NL;

## Beschreibung

Die Erfindung bezieht sich auf eine Vorrichtung zur Durchführung des Eindickens von Schluff und Ton in einem Verfahren zum kontinuierlichen Reinigen von Boden zur Entfernung von Schadstoffen gemäß dem Oberbegriff des Patentanspruches, dessen Merkmale in Verbindung miteinander zum Stand der Technik gehören.

Es ist bekannt, mit Schadstoffen verunreinigten Boden mit Flüssigkeiten, insbesondere Wasser, zu waschen, wobei dem Wasser Chemikalien zugesetzt werden, um die Schadstoffe aus dem Boden zu extrahieren. Die Schadstoffe gehen dann in gelöster Form oder als Suspension in die Wasserphase über. Durch die Trennung von Boden und Wasser wird dann sauberer Boden erhalten. Das Wasser wird durch eine anschließende Aufbereitung von Schadstoffen gereinigt.

In der Theorie können nahezu alle Schadstoffe aus dem Boden entfernt werden, aber in der Praxis ergeben sich wesentliche Einschränkungen. So werden bei Boden mit vielen feinen Partikeln viele dieser Feinanteile mit der Spülflüssigkeit mitgeführt. Somit kann das Spülwasser bei dar Abtrennung von Boden nur von Kies, Sand und grobem Schluff gereinigt werden, wohingegen das dem Wasserreinigungsverfahren zur Abscheidung der Schadstoffe zugeführte Spülwasser noch mit mittlerem und feinem Schluff sowie Ton vermischt ist. So werden bei einem Boden, der z. B. 20 % an feinen Feststoffen enthält, diese Feststoffe zusammen mit den Schadstoffen im Spülwasser zur Wasserreinigung ausgeschleust. Da dieser Anteil feiner Feststoffe in den herkömmlichen Entwässerungsmaschinen, z. B. Kammerfilterpressen oder Zentrifugen, nur bis ca. 30 % Trockensubstanz konzentriert werden kann, wird bei einem Ausgangsboden von ca. 80 bis 90 % Trockensubstanz folglich eine genauso große Schlammenge erzeugt, wie an Bodenmenge gereinigt werden sollte. Hinzukommt, daß bei größeren Schadstoffanteilen die Kosten für die Chemikalien aufgrund des hohen Anteiles an feinen Feststoffen im Spülwasser sehr stark ansteigen. Darüberhinaus ist ein erheblicher Aufwand notwendig, um die Schadstoffe im Abwasseraufbereitungsverfahren abzutrennen und noch weiter zu verarbeiten oder zu vernichten.

Der Erfindung liegt von daher die Aufgabe zugrunde, eine Vorrichtung der gattungsgemäßen Art zuschaffen, mit welchem der Boden auch dann in wirtschaftlich vertretbarer Weise von den Schadstoffen gereinigt werden kann, wenn der Boden geringe oder erhebliche Mengen an feinen Festbestandteilen enthält, deren Korngröße kleiner als 20 » ist, wobei der Feststoffanteil an Boden bei Beginn der Wasseraufbereitung gegen Null gehen soll und eine Korngröße von kleine 1 » aufweist und wobei der Boden in einer Form wiedergewonnen werden soll, der gereinigt und ablagerungsfähig ist.

Die Lösung dieser Aufgabe ergibt sich aus dem kennzeichnenden Teil des Patentanspruches Bei der erfindungsgemäßen Vorrichtung werden bereits vor Beginn der Wasseraufbereitung auch solche Feststoffe aus der Schlammsuspension abgeschieden, welche Korngrößen zwischen 20 » und <1 » haben, wobei der Anteil an Feststoffen überhaupt gegen Null geht. Dies wird durch mehrere aufeinanderfolgende separate Verfahrensschritte ermöglicht, in denen aus der Schlammsuspension stufenweise die Feststoffanteile ausgeschieden werden, wobei der Feststoffanteil gegen Null geht und die allenfalls noch im Spülwasser vor Einleitung der Wasseraufbereittung enthaltenen feinen Feststoffanteile eine Korngröße von kleiner 1 » aufweisen. Hierdurch wird die Wasseraufbereitung nur unwesentlich durch geringste Mengen an feinen Feststoffen von Korngrößen kleiner als 1 » beeinträchtigt. Während das derart auch von feinsten Feststoffanteilen gereinigte Spülwasser der Wasseraufbreitung zur Abscheidung der Schadstoffe zugeführt wird, werden gleichzeitig die vorher abgeschiedenen feinen Feststoffanteile mit Korngrößen zwischen 60 » und 1 » unter Zusatz z. B. von Polyelektrolyt eingedeckt, wobei die Eindickung durch Kompression durch das Eigengewicht des feinen Feststoffschlammes erfolgt und wobei anschließend Sand zur weiteren Verfestigung des 20 bis 30 %-igen Produktes an feinsten Feststoffen verwendet wird.

Aufgrund des Abtrennens von feinen Feststoffen kann die Wasseraufbereitung des Spülwassers zur Abscheidung der Schadstoffe in einer kostengünstigen und besonders einfachen Verfahrensweise durchgeführt werden, wobei die Menge an zuzusetzenden Chemikalien relativ gering ist und ferner nur unwesentliche Aufwendungen für die Abscheidung der allenfalls noch verbliebenen Spuren von Feststoffen von kleiner als 1 » erforderlich sind.

Für die Durchführung des Eindickens der von den Schadstoffen gereinigten Bodenteile Schluff und Ton ist eine Eindickvorrichtung (53) aus einem mit einem Mischer (57) versehenen Flockungsbehälter (56), dem der 5 %ige Dünnschlamm zugeführt wird, einer unter dem Flockungsbehälter angeordneten Seiherzone (58) zur Vorabscheidung von Spülwasser und einem mit einer Neigung von 5 bis 15° gegenüber der Horizontalen versehenen Schneckenrohr (61) mit einer Förderschnecke (60) sowie einer am Ende des Schneckenrohres (61) angebrachten Seiherzone (63) gebildet, wobei durch den entstehenden Druck der Förderschnecke (60) auf das Feststoffgemisch durch dessen Eigengewicht eine Entwässerung in der Seiherzone (63) erfolgt.

Die aus dem Boden zu entfernenden Schadstoffe, welche durch Extraktion dem Boden entzogen und vom Spülwasser übernommen werden und in einer Wasseraufbereitung wieder dem Spülwasser entzogen werden, sind im wesentlichen nachstehende Schadstoffe :
1. Kohlenwasserstoffe als Emulsionen,
2. leichtflüchtige chlorierte Lösungsmittel, wie Trichlorethen (Tri), Tetrachlorethan (Per), 1,1,1-Trichlorethan, Methylenchlorid, Tetrachlormethan (Tetra), 1,2-Dichlorethen,
   wobei es sich im wesentlichen um chlorierte und bromierte C1- und C2-Verbindungen mit 2-4 Halogenatomen pro Molekül und einem Siedepunkt zwischen 30 und 150 °C handelt, leichtflüchtige Trihalogenmethane, wie Chloroform, und sonstige leichtflüchtige Kohlenwasserstoffe wie Benzol, Tuluol, O-Xylol, Benzin und Alkohole,
3. Schwerflüchtige Kohlenwasserstoffe und schwerflüchtige Halogenkohlenwasserstoffe (SHKW), welche im Regelfall acyclische oder carbocyclische Kohlenwasserstoffe mit mehr als 5 C-Atomen mit einem niedrigen Dampfdruck 10 ⁻³ mbar bei 20 °C sowie einem Siedepunkt über 180 °C sind, wie PCB's, Lindan, Phenol, etc., Organochlorpestizide, insbesondere insektizide Chlorkohlenwasserstoffe, wie DDT und strukturverwandte Verbindungen,
4. Schwermetalle, wie Cadmium, Arsen, Nickel, Chrom III, Blei, Zink und Quecksilber, und
5. Gifte, wie Cyanide, Chromate und Nitrite.

Als Zusatzmittel zur Lösung der Schadstoffe werden bei Schadstoffen gemäß Ziff. 3 Tenside und aromatische wie entaromatische schwerlösliche Lösungsmittel, bei Schadstoffen gemäß Ziff. 4 Säuren und bei Schadstoffen gemäß Ziff. 5 Laugen oder Säuren mit nachfolgender Entgiftung durch Oxidation bzw. Reduktionschemikalien zugegeben.

Die Erfindung ist nachfolgend anhand einer in den Zeichnungen dargestellten Vorrichtung zum kontinuierlichen Reinigen von Boden zur Entfernung von Schadstoffen näher erläutert. Es zeigen :
Fig. 1 die Vorrichtung mit ihren einzelnen Stufen und dem diese verbindenden Verfahrensablauf und
Fig. 2 eine vergrößert dargestellte Seitenansicht auf eine Vorrichtung zur Eindickung der feinen Feststoffe von 60 » bis 1 »

Die Vorrichtung zum kontinuierlichen Reinigen von Boden zur Entfernung von Schadstoffen umfaßt vier Stufen I bis IV. In der Stufe I wird eine Schlammsuspension aus dem mit Schadstoffen verunreinigten Boden und dem Spülwasser gebildet und die Schadstoffe werden dem Boden entzogen und gehen in gelöster Form oder als Suspension in die Wasserphase über. Es erfolgt am Ende der Stufe I eine Trennung von gereinigtem Boden und Spülwasser. Das Spülwasser wird in der Wasseraufbereitung gemäß den Stufen II, III und IV von den Schadstoffen gereinigt.

Der mit Schadstoffen verunreinigte Boden wird gemäß Pfeil 1 der Vorrichtung zugeführt. Der Boden kann z. B. mit Kohlenwasserstoffen, Schwermetallen und Giften, wie CN, Cr⁶ verseucht sein. Es erfolgt eine Vorabscheidung von Steinen und Sperrgütern mit konventionellen Baumaschinen, wobei Steine und Sperrgüter manuell durch Dampfstrahlreinigung von den Schadstoffen befreit werden. Der übrige Boden wird einem Aufnahmetrog 20 gemäß Pfeil 2 zugeführt. Im Aufnahmetrog 20 wird eine Schlammsuspension durch Zuführung von ca. 10 Teilen Wasser zu einem Teil Boden gebildet, wobei das Wasser über eine Rohrleitung 21 zugeführt wird. Zugeführt werden Chemikalien zur Schadstofflösung über eine Rohrleitung 22, Spülwasser mit Verschmutzung von einem Sandfilter 14 und ferner Spülwasser aus der Stufe I über eine Rohrleitung 23. Im Aufnahmetrog 20 befindet sich eine Pumpe 24, deren Druckleitung als Mammut- oder Saugheberpumpe ausgebildet ist. Durch Zugabe von Luft gemäß Pfeil 4 zur an die Pumpe 24 angeschlossenen Druckleitung 25 wird in dieser die Förderung unterstützt, gleichzeitig findet eine intensive Vermischung zwischen dem Boden und dem Spülwasser sowie der Luft durch die hohe Turbulenz in der Pumpe 24 und der Druckleitung statt.

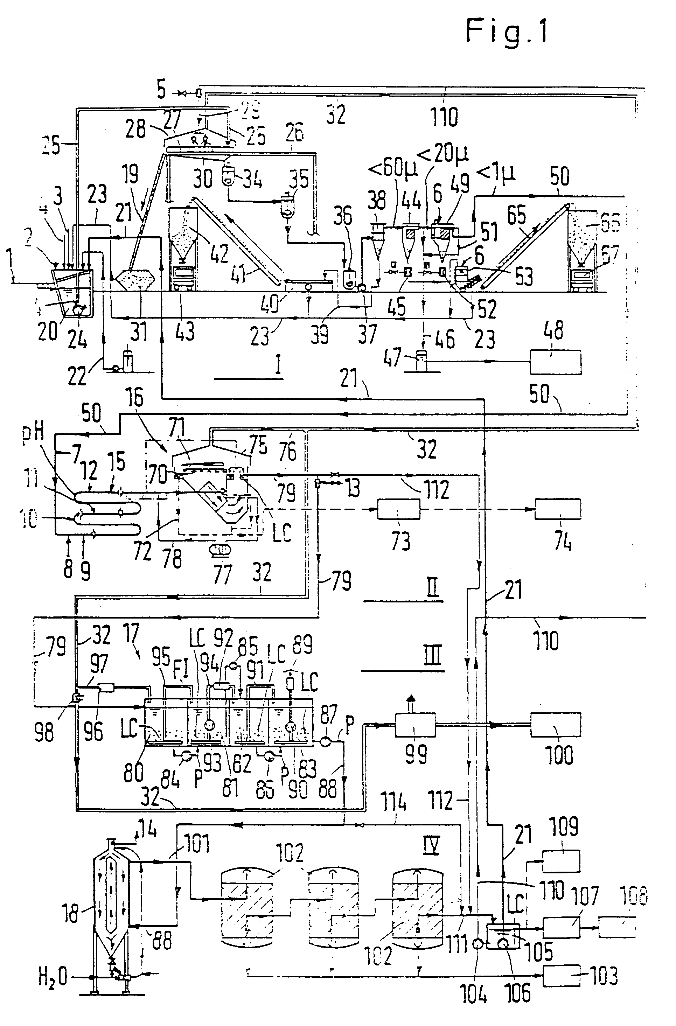

Die Rohrleitung 25 für die Förderung der im Aufnahmetrog 20 gebildeten Schlammsuspension endet auf einem auf einer Bühne 26 befindlichen Schwingsieb 27, welches von einer Luftabsaugungshaube 28 hermetisch verschlossen ist. Die Schlammsuspension wird auf das in Fig. 1 rechts dargestellte Drittel des Schwingsiebes 27 aufgegeben. Dort fließt der größte Teil des Spülwassers mit der Schlammsuspension ab, wobei das eine Korngröße von mehr als 2 mm aufweisende Überkorn auf dem Schwingsieb verbleibt. Im mittleren Drittel des Schwingsiebes 27 wird mit aus einer Rohrleitung 29 über Sprühdüsen 30 zugeführtem Spülwasser unter Hochdruck das Überkorn gewaschen und von den anhaftenden Schadstoffen befreit. In diesem Drittel des Schwingsiebes 27 findet die Entwässerung des Kieses (Überkorn) statt. Das gereinigte Überkorn verläßt das Schwingsieb 27 über eine in Fig. 1 links der Bühne 26 angebrachte Rutsche 19 und wird in einem Container 31 gesammelt. Die das Schwingsieb 27 hermetisch verschließende Absaughaube 28 ist mit einem Saugkanal 32 verbunden, über welchen die abgesaugte Luft einer Luftreinigungsstufe 99 zugeführt wird, welche später noch beschrieben werden wird.

Im freien Gefälle fließt die Schlammsuspension, bestehend aus Sand mit einer Korngröße von weniger als 2 mm, Schluff und Ton sowie dem Spülwasser nacheinander in mehrere z. B. 3 Extraktoren 34, 35, 36, welche z. B. als Rührreaktoren ausgebildet sind. In den Extraktoren 34, 35, 36 findet ein intensiver Kontakt zwischen dem Spülwasser und den Feststoffen des Bodens statt. Gleichzeitig werden die Feststoffe des Bodens weiter verkleinert. Die Anzahl der Extraktoren 34, 35, 36, deren Größe und damit Aufenthaltszeit der Schlammsuspension in den Extraktoren 34, 35, 36 ist von der Art der Schadstoffe und den Chemikalien abhängig, die im Aufnahmetrog 20 dem Boden zugesetzt werden. Die vorgegebenen Verweilzeiten werden je nach Schadstoff vorher im Labor ermittelt. Während des Aufenthaltes der Schlammsuspension in den Extraktoren 34, 35, 36 werden die Schadstoffe in gelöster Form oder als Suspension in die Wasser-Lösungsmittelphase des Spülwassers überführt.

Mittels einer Pumpe 37 wird die Schlammsuspension anschließend weiter gefördert und der Trennung von gereinigtem Boden und Spülwasser unterzogen, so daß die nachfolgende Aufbereitung die Trennung der Feststoffe von der Wasser-Lösungsmittelphase bewirkt. In einem Hydrozyklon 38 bekannter Bauart wird der Sandanteil abgetrennt, welcher Korngrößen zwischen 2 mm und 0,06 mm (60 ») umfaßt. Der Sand wird am Boden des Hydrozyklons 38 abgeführt und über eine Rohrleitung 39 einem Schwingsieb 40 zugeführt. Hier wird der Sand nachentwässert. Über ein Förderband 41 wird der Sand einem Silo 42 zugeführt und per LKW 43 abgefahren. Das vom Schwingsieb 40 abtropfende Wasser wird über die Rohrleitung 23 dem Aufnahmetrog 20 als Spülwasser zugeführt.

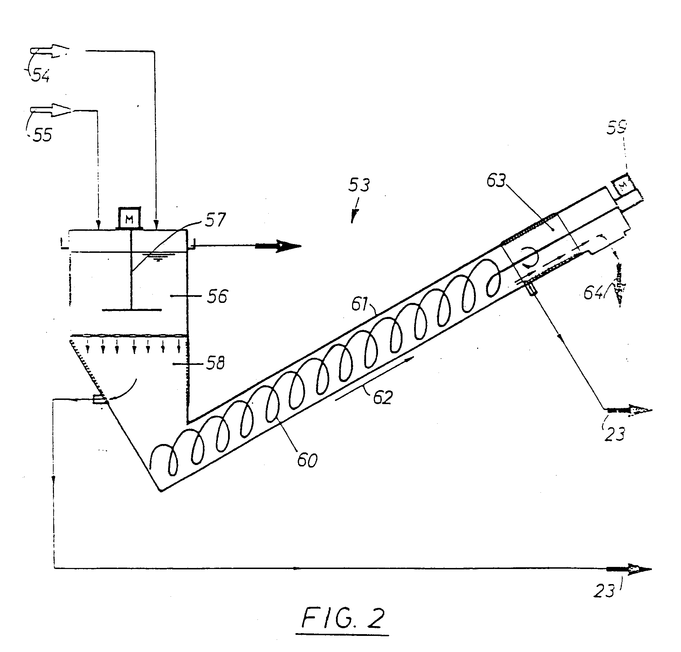

Die verbliebene Schlammsuspension wird nunmehr einem ersten Wellplatten- oder Parallelplattenabscheider 44 zugeführt, wobei nur noch Feststoffbestandteile enthalten sind, deren Korngröße kleiner 60 » ist. Im ersten Plattenabscheider 44 wird der grobe Schluff entwässert. Der erste Plattenabscheider 44 dient zur Trennung von drei Phasen, nämlich den sich unten absetzenden Feststoffen, den sich oben absetzenden Leichtstoffen und dem in der Mitte befindlichen Spülwasser, welches noch Feststoffe einer Korngröße kleiner 20 » aufweist. Die Feststoffe werden über ein am unteren Ende des Konus angeordnetes automatisches Pneumatikventil 45 bei einem Trockengehalt von ca. 30 % Trockensubstanz abgezogen. Die Leichtstoffe werden über eine Rohrleitung 46 einen Leichtstoffbehälter 47 zugeführt und von da zur Wiederaufbereitung oder Verbrennung einem Behälter 48 zugeführt. Die verbleibende Schlammsuspension wird einem zweiten Wellplatten- oder Parallelplattenabscheider 49 zugeführt. Unter Zugabe von Flockungs- und Flockungshilfsmitteln, z. B. drei wertigen Metallsalzen und Polyelektrolyten (PE) werden der mittlere Schluff, der feine Schluff und Ton abgetrennt und entwässert. Das aus dem zweiten Plattenabscheider 49 über die Rohrleitung 50 abfließende Spülwasser hat einen Feststoffgehalt, der gegen Null geht, wobei die allenfalls verbliebenen Feststoffe eine Korngröße von kleiner 1 » aufweisen. Das Spülwasser wird über die Rohrleitung 50 der Wasseraufbereitung in den Stufen II-IV zugeführt, welche weiter unten noch beschrieben werden wird. Eventuell sich noch absetzende Leichtstoffe werden über einen zusätzlichen, der Flotation vorgeschalteten Leichtstoffabscheider über die Rohrleitung 51 der Rohrleitung 46 und damit dem Leichtstoffbehälter 47 zugeführt. Der sich am Boden des zweiten Plattenabscheiders 49 absetzende Schlamm wird über ein an den Boden des schlanken Konus angeschlossenes automatisches Pneumatikventil 52 abgezogen und zusammen mit dem aus dem ersten Plattenabscheider 44 über die Rohrleitung 45 abgezogenen Schlamm der in Fig. 2 näher dargestellten Eindickvorrichtung 53 zugeführt. Das aus der Eindickvorrichtung 53 abgeführte Spülwasser wird über die Rohrleitung 23 wieder dem Aufnahmetrog 20 zugeführt.

Der in Fig. 2 näher dargestellten Eindickvorrichtung werden gemäß Pfeil 54 Polyelektrolyt und gemäß Pfeil 55 etwa 5 %-iger Dünnschlamm über die Pneumatikventile 45, 52 aus den beiden Plattenabscheidern 44 bzw. 49 zugeführt. Die Eindickvorrichtung 53 umfaßt einen Flockungsbehälter 56. In diesem wird unter Zugabe des Polyelektrolyten gemäß Pfeil 54 eine Flocke aufgebaut, wobei eine schonende Durchmischung mittels eines Getriebemischers 57 erfolgt. Das bei der Flockung frei werdende Wasser fließt über eine Seiherzone 58 in die Rohrleitung 23 und von dort zum Aufnahmetrog 20 zurück Das sich am Boden der Seiherzone absetzende Feststoffgemisch wird mittels einer von einem Antriebsgetriebemotor 59 angetriebenen Förderschnecke 60 in einem schrägaufwärts gerichteten Schneckenrohr 61 in Richtung des Pfeiles 62 gefördert. Das Schneckenrohr 61 hat je nach Art des Bodens eine Neigung von 5 bis 15 % gegenüber der Horizontalen. Durch den entstehenden Druck der Förderschnecke 60 auf das Feststoffgemisch unter gleichzeitiger Kompression des Feststoffgemisches durch dessen Eigengewicht erfolgt eine Entwässerung in der Seiherzone 63, welche sich am oberen Ende des Schneckenrohres 61 befindet. Das in der Seiherzone 63 anfallende Spülwasser wird wiederum über die Rohrleitung 23 dem Aufnahmetrog 20 zugeführt. Der Feststoff wird am oberen Ende des Schneckenrohres 61 ausgetragen und verläßt das Schneckenrohr 61 in Richtung des Pfeiles 64 in einer Konzentration von etwa 20 bis 30 %. Der ausgetragene Feststoff wird über ein Förderband 65 einem Silo 66 zugeführt und per LKW 67 abgefahren. Zur Erzeugung unmittelbar ablagerungsfähigen Bodens wird dem im Silo 66 weiterhin durch Bodensiebe in Form poröser Elemente entwässerten Feststoff gereinigter Sand aus dem Silo 42 zugemischt, damit ein verdichtbarer Boden gebildet wird.

Der besondere Vorteil der Eindickvorrichtung 53 gemäß Fig. 2 besteht darin, daß der aus den Plattenabscheidern 44 und 49 abgezogene feine Feststoff ohne Entwässerung über Filter, wie Kammerfilterpressen und Entwässerungsmaschinen ähnlicher Bauart entwässert und wieder verfestigt werden kann, so daß der Boden unverzüglich nach Durchlaufen der ersten Verfahrensstufe wieder eingelagert werden kann.

Aufgrund des voranstehend beschriebenen Verfahrens der Trennung des Bodens vom Spülwasser, in welches die Schadstoffe vom Boden extrahiert sind, enthält das Spülwasser neben den Schadstoffen in gelöster Form oder als Suspension nur geringste Anteile an feinsten Feststoffen, deren Korngröße unter 1 » liegt. Hierdurch ist das nachfolgend beschriebene Aufbereitungsverfahren des Spülwassers, welches durch die Rohrleitung 50 zur Stufe II fließt, mit relativ geringem Aufwand durchführbar. Am Ende der Stufe I sind somit alle Schadstoffe, bis auf die bereits vorher mindestens teilweise oder sogar vollständig abgezogenen Leichtstoffe im Spülwasser enthalten und zwar im Regelfall in gelöster Form. Das Spülwasser tritt nun über die Rohrleitung 50 in die Stufe II ein. Hier werden gemäß Pfeil 7 Zusatzmittel dem Spülwasser beigegeben, wie z. B. Fällmittel (Na₂S), Entgiftungschemikalien, z. B. (NaOCl). Anschließend erfolgt gemäß Pfeil 8 die Zugabe von Adsorptionsmitteln in Pulverform, sowie gemäß Pfeil 9 die Zugabe von Säure (NaOH) bzw. Laugen, gemäß Pfeil 10 die Zugabe von Flockungsmitteln (FeCl₃), sowie gemäß Pfeil 11 die Zugabe von weiteren Säuren bzw. Laugen zur pH-Wert-Einstellung und es wird gemäß Pfeil 12 Polyelektrolyt zugesetzt. Somit werden Gifte z. B. durch Oxidation von Zyaniden zerstört oder durch Reduktion in eine abscheidbare Form überführt. Durch die pH-Werteinstellung und durch die Zugabe von Flockungsmitteln werden z. B. Schwermetalle in eine ungelöste Form überführt. Die Kohlenwasserstoffe werden durch die Zugabe von Adsorptionsmitteln oder anderen Adsorbien teilweise gebunden. Bestimmte Schwermetalle, wie z. B. Quecksilber, werden durch die Zugabe von Sulfid oder andere ähnlich wirkende Substanzen in eine schwerlösliche Form überführt. Diese Behandlung des Spülwassers erfolgt vorzugsweise im Rohrreaktor oder Rohrflockulator 15 ; diese Prozesse können auch in konv. Rührreaktoren durchgeführt werden. Die ausgefällten bzw. adsorbierten Stoffe werden durch die Zugabe von Polyelektrolyt gemäß Pfeil 12 zu großen, gut abscheidbaren Flocken agglomeriert und dann in der nachfolgenden Flotationsanlage 16 abgeschieden. Die Flotationsanlage ist eine sogenannten Entspannungsflotationsanlage mit einem sehr hohen Wirkungsgrad, wie z. B. die TPI-Flotationsanlage von Pielkenrood-Vinitex B. V. (DE-PS 20 30 617).

In die Entspannungs-Flotationsanlage 16 wird das Spülwasser gemäß den dargestellten Pfeilen in freiem Gefälle zugeführt. Die abgeschiedenen Schadstoffe sammeln sich auf der Oberfläche 70 der Schrägkammer und werden von dort über Rechen 71 einer Schadstoffableitung 72 zur maschinellen Entwässerung und Trocknung 73 sowie zur Deponie oder Verbrennung 74 zugeführt. In dem hier abgeschiedenen Schlamm mit einer Konsistenz von 4 bis 10 % befinden sich Giftstoffe, wie z. B. Schwermetalle und Kohlenwasserstoffe. Ein Teil der leichtflüchtigen Kohlenwasserstoffe wird in die Luftphase ausgeschieden. Deshalb ist die Flotationsanlage 16 mit einer Abdeckhaube 75 versehen. Die abgesaugte Luft wird über die Rohrleitung 76 der Luftreinigungsanlage 99 zugeführt. Eine Rezirkulationspumpe 77 führt einen Teil des Spülwassers über eine Rohrleitung 78 zurück, um diesen Teil des Spülwassers erneut der Flotationsanlage 16 zuzuführen.

Das in der Flotationsanlage 16 in beschriebener Weise gereinigte Spülwasser verläßt die Flotationsanlage 16 über die Rohrleitung 79 und wird unter Zuführung von Luft gemäß Pfeil 13 der Stufe III zugeführt. Hier wird in einem Gegenstrom-Kaskaden-Reaktor 17 in einer Mehrstufen-Gegenstromdesorption eine Ausblasung weiterer Schadstoffe durchgeführt. Der Gegenstrom-Kaskaden-Reaktor 17 besteht aus mehreren hintereinander geschalteten Wannen 80 bis 83, durch welche das Spülwasser kaskadenförmig fließt. Das Spülwasser wird von der Wanne 80 mit einer Pumpe über die Rohrleitung 84 der Druckgefäß-Wanne 81 zugeführt. Von dieser erfolgt eine überführung des Spülwassers auf der Oberseite über ein automatisches Ventil und eine Rohrleitung 85. Von der Wanne 82 drucklos wird das Spülwasser dann der Wanne 83 über eine Pumpe und eine Rohrleitung 86 zugeführt. Von der Druckgefäß-Wanne 83 wird das Spülwasser dann bodenseitig mittels einer Pumpe 87 in die Rohrleitung 88 überführt. Im Gegenstrom hierzu wird im Bereich der Wanne 83 Luft über einen Saugschalldämpfer 89 angesaugt und bodenseitig der Wanne 83 mittels eines Gebläses 90 zugeführt. Die ausgeblasenen mit Schadstoffen belasteten Luftmengen werden durch Ausbildung eines Überdruckes im oberen Teil der Wanne 83 mittels einer Rohrleitung 91 der Wanne 82 bodenseitig zugeführt. Über eine mit einem Tropfenabscheider 92 und einem weiteren Gebläse 93 versehene Rohrleitung 94 wird die sich an der Oberseite der Wanne 82 ansammelnde, mit Schadstoffen belastete Luftmenge bodenseitig in die Wanne 81 eingeführt. Unter Überdruck verläßt die mit Schadstoffen angereicherte Luft die Wanne 81 und wird über die Rohrleitung 95 der ersten Wanne 80 bodenseitig zugeführt. Von hier wird die mit Schadstoffen belastete Luft abgezogen und über einen weiteren Tropfenabscheider 96 der Rohrleitung 97 zugeführt. Diese mündet an die bereits mit der Abluftleitung 76 verbundene Abluftleitung 32, welche die mit Schadstoffen angereicherte Luft über einen Lufttrockner 98 der Luftreinigungsanlage 99 zuführt.

Die Wannen 80 bis 83 sind druckdicht voneinander getrennt und druckdicht verschlossen. Über eine Niveauregelung wird der Wasserstand in den Behältern in Grenzen konstant gehalten durch Ein- und Ausschalten der Pumpen und automatischen Ventile.

Um eine Luftreinigung durchzuführen, ist eine Schadstoffkonzentration in der Luft in einer Größe erforderlich, die größer sein muß als die zulässigen Werte der TA-Luft. Die in der Wasseraufbereitungstechnik üblichen Ausblaseverfahren erfordern Luftmengen, die mindestens das 50-fache der Wassermenge betragen. Da die Spülwasserverseuchung oder auch die Grundwasserbelastung an leichtflüchtigen Kohlenwasserstoffen nur im Bereich von ca. 1 bis 100 mg/l oft nur bei 10 mg/l liegt, ist eine Luftreinhaltung bei diesen Luftmengen praktisch nicht mehr möglich. Somit wird das Entgiftungsproblem von Wasser im Stand der Technik in die Luft verlagert.

Mit dem beschriebenen Gegenstrom-Kaskaden-Reaktor 17 kann die zugeführte Luftmenge erheblich vermindert werden, um eine höhere Belastung der geringeren Luftmenge mit Schadstoffen zu erreichen. Der Gegenstrom-Kaskaden-Reaktor 17 liefert bei Luftmengen von nur dem 10-20-fachen der zu reinigenden Wassermenge Ergebnisse von ca 90-99 % des theor. Ausblasungseffekts. Hierin liegt ein wesentlicher Vorteil des anhand der beschriebenen Vorrichtung erläuterten Verfahrens. In Stufe III werden die leichtflüssigen Kohlenwasserstoffe aus dem Spülwasser ausgeblasen und in die Luft überführt.

Die nachgeschaltete Luftreinigungsanlage 99 sammelt die unter den Abzugshauben 75 in der Stufe I und 41 in der Stufe II sowie die im Gegenstrom-Kaskaden-Reaktor 17 anfallenden, mit Schadstoffen belasteten Luftmengen und reinigt diese in einem A-Kohlefilter. Bei großen Luftmengen und hohen Schadstoffanteilen kann eine Kondensationsreinigung angewendet werden. Hierbei werden die leichtflüchtigen Kohlenwasserstoffe in flüssiger Form zurückgewonnen und wieder verwertet oder durch Verbrennung vernichtet, wie es durch die Anlage 100 im Prinzip dargestellt ist.

Die aus der Stufe III über die Rohrleitung 88 abgeführten Spülwassermengen werden einem Sandfilter 18 zugeführt, der z. B. als kontinuierlicher Radialfilter gemäß EP-Patent 2727 ausgeführt sein kann. Hier erfolgt eine Filtrierung der restlichen Schmutzstoffe im kontinuierlichen Radialfilter. Die Reinigung des verschmutzten Filtersandes erfolgt mit Wasser und Luft kontinuierlich. Das Spülwasser mit den Verschmutzungen wird über die Leitung gemäß Pfeil 14 wieder zurück in den Aufnahmetrog 20 der Stufe I geleitet. Das von unten durch die Rohrleitung 88 radial dem Sandfilter 18 zugeführte Spülwasser verläßt den Radialfilter 18 oben über die Rohrleitung 101 und wird einer Adsorption in hintereinander geschalteten Adsorptionsgefäßen 102 unterworfen. Diese sind mit Aktivkohle und/oder Aktivtonerde und/oder Adsorber-Ionenaustauscherharzen oder Kombinationen dieser Materialien angefüllt. Es erfolgt eine Adsorption schwer abscheidbarer Schadstoffe, wie z. B. Pestizide, Phenole und der restl. leichtflüchtigen löslichen Kohlenwasserstoffe. Die Aktivkohle, Aktivtonerde oder Adsorberionenaustauscherharze können regeneriert werden, wobei die anfallenden Schadstoffe einer Verwertung bzw. einer Vernichtung zugeführt werden, wie es durch die Anlage 103 prinzipartig gezeigt ist.

Das in der vierten Stufe abschließend gereinigte Spülwasser fließt über eine Rohrleitung 111 in einen Klarwassertank 105 ab. Von dort wird das Spülwasser über eine Pumpe 106 und die Rohleitung 21 wieder dem Aufnahmetrog 20 der Stufe I zugeführt. Somit ergibt sich ein geschlossener Spülwasserkreislauf über die Stufen I-IV.

Da sich im geschlossenen Spülwasser-Kreislauf eine Aufsalzung des Spülwassers ergeben würde, wird entweder eine Entsalzungsanlage 107 nachgeschaltet, welche die Salze kristallisiert und einer geeigneten Deponie 108, z. B. einem Salzbergwerk zu führt, oder es wird ein Teilstrom des Klarwassers zur Absalzung der Kanalisation 109 zugeführt, um den Salzspiegel konstant zu halten. In diesem Fall muß der Teilstrom durch Zufuhr von Spülwasser zum Aufnahmetrog 20 ersetzt werden.

Ein Teil des Klarwassers wird aus dem Klarwasserbehälter 105 über die Rohrleitung 110 mittels einer Pumpe 104 den Sprühdüsen 30 oberhalb des Schwingsiebes 27 in Stufe I zugeführt, wobei gemäß Pfeil 5 ein Steuermedium einwirkt.

Eine unmittelbare Rückführung von Spülwasser kann aus der Stufe II z. B. bei Schadstoffen wie Schwermetallen und wenig löslichen Kohlenwasserstoffen über die Rohrleitung 112 unmittelbar in den Klarwasserbehälter 105 erfolgen. Auch kann eine Rückführung des Klarwassers bei überwiegend leichtflüchtigen Kohlenwasserstoffen unmittelbar am Ausgang der Stufe III über die Rohrleitung 114 direkt in den Klarwasserbehälter 105 durchgeführt werden.

## Patentansprüche

1. Vorrichtung zur Durchführung des Eindickens von Schluff und Ton in einem Verfahren zum kontinuierlichen Reinigen von Boden zur Entfernung von Schadstoffen, wie z. B. Kohlenwasserstoffe als Emulsionen, leichtflüchtige chlorierte Lösungsmittel, leichtflüchtige Trihalogenmethane, sonstige leichtflüchtige Kohlenwasserstoffe, schwerflüchtige Kohlenwasserstoffe und schwerflüchtige Halogenkohlenwasserstoffe, Organochlorpestizide, Schwermetalle und Gifte, durch Waschen des von proben Bestandteilen, wie z. B. Steinen vorgereinigten Bodens in mit Zusatzmitteln versetztem Spülwasser, durch anschließende Extraktion der Schadstoffe und durch nachfolgendes Trennen der Schlammsuspension unter Abführen des gereinigten Bodens vom Spülwasser und durch abschließendes Reinigen des Spülwassers von den aus dem Boden extrahierten Schadstoffen, dadurch gekennzeichnet, daß die Schlammsuspension in separaten, aufeinanderfolgenden Verfahrensschritten einer intensiven turbulenten Vermischung, einer Siebung zur Entfernung von Kies, einer mehrstufigen Extraktion zur Bindung der Schadstoffe an das Spülwasser, einer Abscheidung von Sand, einer Abscheidung von grobem Schluff unter gleichzeitiger Abscheidung von Leichtstoffen, einer Abscheidung von mittlerem und feinem Schluff und von Ton bis auf einen Feststoffanteil von nahezu Null bei einer Korngröße von kleiner 1 » unterzogen wird, daß die abgeschiedenen Schluff- und Ton-Feststoffbestandteile unter Zusatz von Polyelektrolyt einer Kompression und nachfolgenden Eindickung unter Zumischung von Sand unterzogen werden, daß das vom Boden abgetrennte, mit den extrahierten Schadstoffen belastete Spülwasser unter Zusatz von Lösungsmitteln einer Entgiftung, Flockung, Adsorption und Flotation unterworfen wird, wobei noch verbliebene Feinstbestandteile kleiner 1 » als Schlamm abgeführt und dem Spülwasser nicht gelöste Schadstoffe, wie z. B. Kohlenwasserstoffe entzogen werden, daß das Spülwasser anschließend im Gegenstrom belüftet wird, wobei Reste der gelösten Bestandteile, z. B. leichtflüchtige Chlorkohlenwasserstoffe und leichtflüchtige Kohlenwasserstoffe und sonstige leichtflüchtige Stoffe ausgeblasen werden, daß abschließend die noch verbliebenen, gelösten Bestandteile der Schadstoffe, wie z. B. hochsiedende Kohlenwasserstoffe und Reste der leichtflüchtigen Chlorkohlenwasserstoffe sowie metallische Spurenelemente abgefiltert werden, und daß alle Verfahrensschritte innerhalb eines geschlossenen Kreislaufes durchgeführt werden und das von Schadstoffen gereinigte Spülwasser wieder zur Bildung der Boden-Wasser-Shlammsuspension zugeführt wird, und wobei die Schlammsuspension aus Spülwasser und mit Schadstoffen belastetem Boden im Verhältnis von ca. 1 zu 10 gebildet, unter Zugabe von Luft vermischt und zur Abtrennung von Kies einer Schwingsiebung unterworfen wird, daß die Schlammsuspension anschließend einem Extraktionsschritt zur Extraktion der Schadstoffe aus dem Boden und zur Bindung der Schadstoffe an das Spülwasser zugeführt wird, daß die Schlammsuspension nachfolgend Abscheidungsschritten zur Abscheidung von Sand mit einer Korngröße von größer 60 », einer Abscheidung von grobem Schluff mit einer Korngröße zwischen 60 » und 20 » und einer Abscheidung von mittlerem und feinem Schluff sowie Ton mit Korngrößen zwischen 20 » und kleiner 1 » unterworfen wird, wonach das abgeführte Spülwasser nur noch geringste Mengen an Feinststoffen mit Korngrößen kleiner 1 » aufweist, und daß die abgezogene Menge an Schluff und Ton eingedickt wird, wozu eine Eindickvorrichtung (53) aus einem mit einem Mischer (57) versehenen Flockungsbehälter (56), dem der 5 %ige Dünnschlamm zugeführt wird, einer unter dem Flockungsbehälter angeordneten Seiherzone (58) zur Vorabscheidung von Spülwasser und einem mit einer Neigung von 5 bis 15° gegenüber der Horizontalen versehenen Schneckenrohr (61) mit einer Förderschnecke (60) sowie einer am Ende des Schneckenrohres (61) angebrachten Seiherzone (63) gebildet ist, wobei durch den entstehenden Druck der Förderschnecke (60) auf das Feststoffgemisch durch dessen Eigengewicht eine Entwässerung in der Seiherzone (63) erfolgt.

## Claims

1. A device for carrying-out the thickening of silt and clay in a method for continuously cleaning soil to remove pollutants, as, e.g., hydrocarbons as emulsions, highly volatile chlorinated solvents, highly volatile methane halides, not volatile hydrocarbons and hydrocarbon halides, organochlorine pesticides, heavy metals and poisons, by washing the soil precleaned from coarse components as, e.g., stones in rinse water with additives, by subsequent extraction of the pollutants and separation of the mud under carrying the cleaned soil away from the rinse water and final cleaning of the rinse water from the pollutants extracted from the soil, characterized by that the mud suspension is subjected in separate subsequent process steps to an intense turbulent mixing step, to a sieving step to remove gravel, to a multi-stage extraction step to bind the pollutants to the rinse water, to a separation step of sand, to a separation step of coarse silt under simultaneous separation of light materials, to a separation step of medium and fine silt and of clay down to a solid matter content of nearly zero for a grain size of smaller than 1 », that the separated solid matter components of silt and clay are subjected to a compression under additon of polyelectrolyte and to a subsequent thickening under addition of sand, that the rinse water separated from the bottom and loaded with the extracted pollutants is subjected to a decontamination, flocculation, absorption and flotation under addition of solvents, the remaining very fine components smaller than 1 » being carried away as mud and non-dissolved pollutants as, e.g., hydrocarbons being removed from the rinse water, that the rinse water is then aerated in a counterflow process, wherein the remainders of the dissolved components and other highly volatile materials are blown out, that finally the remaining dissolved components of the pollutants, as, e.g., high-boiling hydrocarbons and remainders of the highly volatile chlorinated hydrocarbons as well as metal trace elements, are filtered out, and that all process steps are executed with a closed cycle and the rinse water cleaned from the pollutants is returned for forming the soil/water/mud suspension, wherein the mud suspension of rinse water and soil loaded with pollutants is formed in a ratio of approximately 1 to 10, that it is mixed under addition of air, and that it is subjected to a vibrational sieving step to remove gravel, that the mud suspension is then subjected to an extraction step to extract the pollutants from the soil and to bind the pollutants to the rinse water, that the mud suspension is thereafter subjected to separation steps to separate sand having a grain size of greater than 60 », to separate coarse silt having a grain size between 60 » and 20 », and to a separation of medium and fine silt and clay having grain sizes between 60 » and smaller than 1 », whereafter the guided-away rinse water comprises only smallest quantities of very fine material having grain sizes under 1 », and that the drawn-off quantity of silt and clay is thickened, for which purpose a flocculation container (56) provided with a mixer (57), to said flocculation container the thin 5 % mud being supplied, a straining section (58) arranged underneath the flocculation container to pre-separate rinse water, and a worm tube (61) sloped by 5° to 15° relative to the horizontal axis and having a conveyer worm (60), and a straining section (63) arranged at the end of the worm tube (61) is formed, by the resulting pressure of the conveyer worm (60) on the solid matter mixture, a dewatering taking place in the straining section (63) because of the own weight thereof.

## Revendications

1. Dispositif pour l'exécution de l'épaississement d'ardoise et d'argile en un procédé pour le nettoyage continu de sols pour l'élimination d'élément polluants, tels que hydrocarbures comme émulsions, solvants chlorés volatils, méthane trihalogéné, autres hydrocarbures volatils, hydrocarbures peu volatils et hydrocarbures halogénés peu volatils et pesticides organochlorés, métaux durs et poisons, par lavage du sol pré-nettoyé des particules grossières, telles que graviers, avec de l'eau de rinçage mélangée à des agents additionnels, par l'extraction ultérieure des produits polluants et séparation des boues en évacuant le sol de l'eau de rinçage et enfin en extrayant les produits polluants de l'eau de rinçage, caractérisé en ce que la suspension des boues est soumise dans différents processus séparés et successifs à un mélange intensif turbulent, à un filtrage pour extraire le gravier, à une extraction en plusieurs stades pour lier les produits polluants à l'eau de rincage, à une précipitation du sable, à une précipitation de grosse ardoise et simultanément de matière légère, à une précipitation d'ardoise moyenne et fine et d'argile jusqu'à une part de matière solide de presque zéro avec une grosseur de grains inférieure à 1 », que les matières solides d'ardoise et d'argile sont soumises avec addition de polyélectrolyte à une compression et épaississement en additionnant du sable, que l'eau de rinçage enlevée du sol avec les produits polluants avec lesquels elle est chargée est soumise en y additionnant des solvants à une détoxication, floculation, adsorption et flottation, les matières très fines inférieures à 1 » résiduelles étant évacuées comme boue et les produits polluants non dissous, tels que les hydrocarbures, étant extraits de l'eau de rinçage, qu'après l'eau de rinçage est aérée par contre-courant permettant d'éliminer des restes des constituants dissous, par exemple des hydrocarbures chlorés volatils, des hydrocarbures volatils et autres matières volatiles, qu'enfin les constituants des produits polluants dissous encore disponibles, tels que hydrocarbures lourds et des restes d'hydrocarbures chlorés volatils ainsi que des éléments de trace métallique sont filtrés, et que tous les processus sont effectués dans un circuit fermé et que l'eau de rinçage nettoyée des produits polluants est de nouveau introduite pour former la suspension boue d'eau du sol, et la suspension de boue de l'eau de rincage et du sol chargé de produits polluants se faisant dans le rapport d'env. 1 sur 10, étant mélangée sous addition d'air et soumise à un criblage à secousses pour la séparation du gravier, qu'après la suspension de boue est transférée à une phase d'extraction pour l'extraction des produits polluants du sol et pour lier les produits polluants à l'eau de rinçage, qu'ensuite la suspension de boue est soumise à des phases de séparation pour la séparation du sable d'une grosseur de grains de 60 », la séparation de grosse ardoise d'une grosseur de grains entre 60 » et 20 » et la séparation d'ardoise moyenne et fine ainsi que d'argile d'une grosseur de grains entre 60 » et inférieure à 1 », l'eau de rinçage évacuée ne contenant alors plus que de faibles quantités de fines particules inférieures à 1 » et la quantité d'ardoise et d'argile retirée étant épaissie, pour ce but un récipient de floculation (56) équipé d'une mélangeur (57) auquel est transmise la boue fine de 5 %, une zone filtrante (58), logée sous le récipient de floculation, pour la préséparation de l'eau de rinçage et d'un tube hélicoïdal (61) incliné de 5 à 15° par rapport à l'horizontale avec une vis transporteuse (60) ainsi que d'une zone filtrante (63) montée sur l'extrémité du tube hélicoïdal (61) étant formé, une dessiccation en résultant dans la zone de filtrage (63) en raison de la pression de la vis transporteuse (60) agissant sur le mélange de matières solides par son propre poids.
